# EUROPEAN PATENT SPECIFICATION

(11) **EP 1 239 683 B1**
(45) Date of publication and mention of the grant of the patent: **09.05.2007**
(21) Application number: 01403311.2
(22) Date of filing: 20.12.2001
(51) Int. Cl.: H04Q 1/30, H04M 3/06

(54) **Method of generating an accurate ring cadence**
Verfahren zur Erzeugung einer akkuraten Rufsignalfolge
Procédé de génération d'une cadence précise d'un signal d'appel

(30) Priority: 22.12.2000 AU PR218700
(43) Date of publication of application: 11.09.2002
(73) Proprietor: Alcatel Lucent, 75008 Paris (FR)
(72) Inventor: Ayton, David, Maroubra, New South Wales 2035 (AU); Monteiro, Karl, Campsie, New South Wales 2194 (AU); Khoe, Philip, Cronulla, New South Wales 2230 (AU); Saunders, Scott, Randwick, New South Wales 2031 (AU); McCormack, Michael, Northwood, New South Wales 2066 (AU)
(74) Representative: Brose, Gerhard

(56) References cited:
- GB-A- 2 303 271
- US-A- 4 435 803
- US-A- 4 675 898

## Description

This invention relates to a telecommunication system known as a multi-service access platform that provides a wide range of subscriber services both narrow band and broad band. The invention particularly relates to one important narrow band service, viz, the provision of a plurality of distinctive ring signals for signalling a subscriber.

A plurality of distinctive ring signals, typically ten, are provided for various applications such as, for example, to distinguish between ring signals from respective parallel telephones.

The distinctiveness of the various ring signals is accomplished by changing the cadence of the signal, turning the ring signal off and on in a predetermined sequence using timers.

Telecom authorities require that the accuracy of the cadence of the various distinctive ring signals be within specifications, further, impulsive noise produced when the ring signal is turned off must be minimized.

In known distinctive ring generation arrangements, the accuracy of ring burst lengths is compromised by the need to delay the turn-off of the signal until a zero-crossing point occurs, which is the preferred point of turn off to minimize impulsive noise. Such an arrangement is known from US 4, 435,803.

Further, in know distinctive ring generator arrangements a central controller manages the generation of the ring signal cadence. This central controller also manages many other tasks of the multi-service access platform. Consequently, the central controller becomes overloaded which introduces further inaccuracies into the ring signal cadence. Furthermore, because of the tendency to overload, the number of subscribers lines connected to the platform is limited.

It is a object of the present invention to provide a method of generating an accurate distinctive ring signal.

It is a further object of the present invention to provide a method of generating an accurate distinctive ring signal having minimum impulsive noise when the ring burst is turned off.

It is a still further object of the present invention to provide a method of generating an accurate distinctive ring signal which does not overload a central controller.

The present invention proposes a method of providing on accurate distinctive ring signal as disclosed in appended claims.

In order that the invention may be readily carried into effect, an embodiment thereof will now be described in relation to the accompanying drawings, in which:

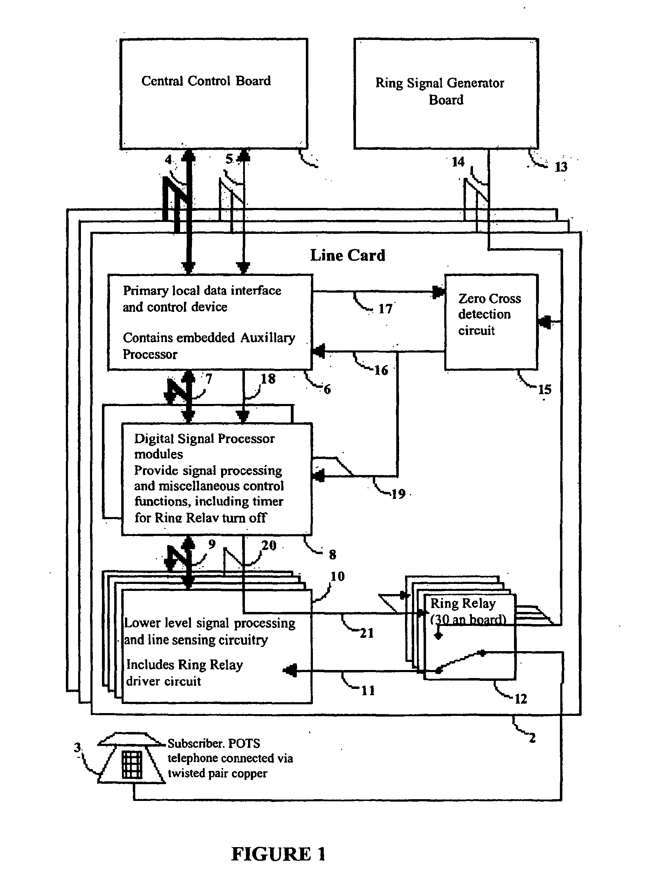

Figure 1 is a block schematic diagram illustrating the present invention.
Figure 2 is a timing diagram illustrating how the present invention achieves a burst of ring signal of precise duration.

Referring to the drawings, a Central Control board (1) forms the central controller of the narrowband segment of a Multi-Service Access Node, and interfaces to multiple Line cards (2). The Line cards (2) provide an analog interface to up to 30 individual subscriber POTS (Plain Old Telephone Service) telephones (3), connected via a network of twisted pair copper cables.

The interface between the Central Control board (1) and Line cards (2) provides a means for reception and transmission of digitally encoded VF data (4) and control information (5). The VF data (4) is demultiplexed and digitally processed as it passes through the Line cards modules (6,7,8,9,10) before being converted to line conditioned analog signals (11) which are connected to the subscriber line via a Ring Relay (12). Each Ring Relay (12) provides a means to switch between the line conditioned analog signal (11) and an AC voltage (Ring Signal) which provides a means to make the subscriber POTS telephone (3) ring.

The Ring Signal is generated by a Ring Signal Generator board (13) and consists of an AC voltage superimposed on a DC voltage (for example 90 VAC at 25 Hz with a-48 V DC offset). The Ring Signal is connected to multiple Line cards in parallel (14). On each Line card board the ring signal is connected to multiple Ring Relays (12) and the Zero Cross Detection circuit (15).

The Central Control board (1) initiates the ringing of a subscriber POTS telephone (13) when it is determined that this action is to occur by decoding higher level protocols. Ringing is initiated by sending a command to the Interface module (6) of the appropriate Line card board via the control information interface (5). This command directs that line X (1 of 30 Line card subscriber circuits) is to ring with distinctive ring cadence Y (1 of 9 cadences). Each cadence describes a unique timing pattern for the application of alternating pulses of ring voltage and silence to the subscriber POTS telephone.

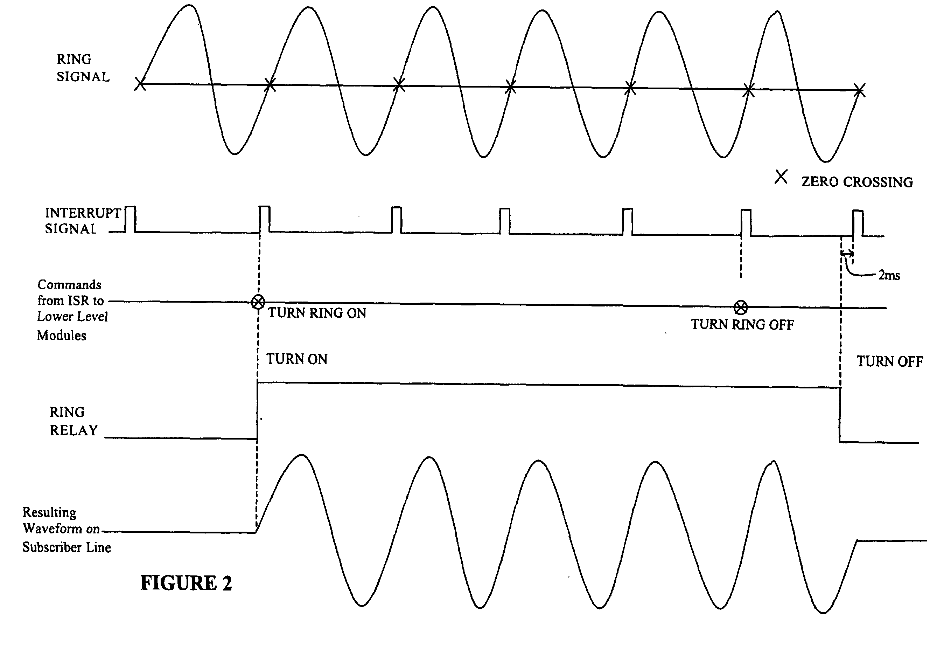

The Zero Cross Detection circuit (15) generates an interrupt to the embedded auxiliary processor on the interface module by sending the Zero Cross Interrupt line (16) high at the Zero Crossing pant of the Ring Signal. The Zero Crossing point is defined as a point in time once per cycle of the AC component of the Ring Signal, where the AC voltage crosses zero volts (see Fig 2). When the interrupt is acknowledged by the ISR (Interrupt Service Routine) resident on the embedded auxiliary processor on the interface module, a reset pulse (17) is sent to the Zero Cross Detection circuit (15), sending the Zero Cross Interrupt line low.

The ISR program controls the application and removal of ring to the subscriber's line by writing to appropriate registers on the signal processor module (18). The timing of the application and removal of ring signal is controlled by maintaining counters in reference to internal tables, which contain timing information appropriate for each of the possible ring cadences. The counters track the number of times that the ISR has been called, and if ring for any particular subscriber needs to switched on or off. In this way, writing to the signal processor module registers which initiate application or removal of ring only happens at the Zero Crossing Point of the Ring Signal.

The signal processor modules contain edge-triggered timers, which are also synchronised to the pulses that occur on the Zero Cross Interrupt line (19). These timers are used to determine the point 2 ms before the next expected Zero Crossing Point. This is done by subtracting 2 ms from the time between the last two received Zero Crossing Point pulses.

When the ISR on the Interface Module writes to the appropriate signal processing register to apply ring to a particular subscriber line, the signal processing module immediately initiates the actuation (apply ring) of the Ring Relay via lower level modules (20,10,21). When the ISR on the Interface Module writes to the appropriate signal processing register to remove ring to a particular subscriber line, the signal processor waits until the next point in time 2 ms before the next expected Zero Crossing Point before initiating the actuation (remove ring) of the Ring Relay via lower level modules (20,10,21).

For example, in a system where the Ring Signal is 25 Hz AC, Zero Cross interrupts will occur every 40 ms. Upon reception of the appropriate command from the Central Control board, the code running on the Embedded Auxiliary Processor on the Interface Module will set up the appropriate internal registers to allow the ISR code to initiate the application of distinctive ring cadence to the subscriber line. To generate a burst of ring 198 ms long, followed by 202 ms of silence, then repeating the cycle, the ISR will write to the appropriate signal processor register to apply ring, then wait for 4 cycles before writing to the appropriate signal processor register to remove ring, then wait for 6 cycles before writing to the appropriate signal processor register to apply ring again, thus repeating the cycle. By writing to the appropriate signal processor register to remove ring one cycle earlier than required, the ring will be removed 2ms before the required point.

In the way described above, accurate ring cadences can be established while also:
- Synchronising the actuation of the Ring Relay to the Zero Crossing Point of the Ring Signal for application of ring, and
- Synchronising the actuation of the Ring Relay to the point 2 ms before the Zero Crossing Point of the Ring Signal for removal of ring,
Thus reducing the impulsive noise that will be induced into the twisted pair copper cable network.

## Claims

1. A method of providing an accurate distinctive ring signal of a selected predetermined cadence in a multi-service access platform arrangement that includes a central processor means (1), a plurality of line cards (2), each line card (2) including an auxiliary processor means (6) and a plurality of controllable ring relays (12), each ring relay (12) controllably connecting ring signals to a subscriber line (3) associated to corresponding line card (2), said method comprising the step of controlling ring cadence of ring signals applied to subscriber lines associated with a line card with said auxiliary processor means (6) associated with said line card consisting of the following steps:
- Generating an interrupt signal (16) at each zero crossing point of a ring signal, which is defined as a point intime once per cycle of the AC component of the ring signal, where the AC voltage crosses zero volts;
- Causing said auxiliary processor means (6) to count said interrupt signals and to initiate actuation of the ring relays on said line card to control accordingly the timing of application and removal of said ring signal in reference to internal tables containing timing information appropriate for said selected predetermined cadence so that the timing of application and removal of said ring signal is synchronized to a zero crossing point of the ring signal.

2. A method according to claim 1, **characterized in that** the timing of removal of said ring signal is synchronized to a point 2 ms before the next expected zero crossing point of the ring signal.

## Patentansprüche

1. Ein Verfahren des Bereitstellens eines genauen kennzeichnenden Rufsignals einer ausgewählten vorgegebenen Kadenz in einer Mehrdienste-Zugangsplattformanordnung, die beinhaltet: ein Zentralprozessormittel (1), eine Mehrzahl von Leitungskarten (2), wobei jede Leitungskarte (2) ein Hilfsprozessormittel (6) und eine Mehrzahl von steuerbaren Rufrelais (12) beinhaltet, wobei jedes Rufrelais (12) steuerbar Rufsignale mit einer Teilnehmerleitung (3) verbindet, die der entsprechenden Leitungskarte (2) zugeordnet ist, wobei das Verfahren den Schritt des Steuerns der Rufsignalfolge von Rufsignalen umfaßt, die auf Teilnehmerleitungen angewendet sind, die mit einer Leitungskarte mit dem Hilfsprozessormittel (6) verbunden sind, das mit der Leitungskarte verbunden ist, umfassend die folgenden Schritte:
- Generieren eines Unterbrechungssignals (16) bei jedem Nulldurchgangspunkt eines Rufsignals, der als ein Zeitpunkt einmal pro Periode der Wechselstromkomponente des Rufsignals definiert ist, wo die Wechselstromspannung durch Null Volt geht;
- Veranlassen des Hilfsprozessormittels (6), die Unterbreahungssignale zu zählen und die Betätigung der Rufrelais in der Leitung auszulösen und entsprechend den Zeitpunkt der Anwendung und Entfernung des Rufsignals bezüglich der internen Tabellen zu steuern, die entsprechende Taktinformationen für die ausgewählte vorgegebene Kadenz beinhalten, so daß der Zeitpunkt der Anwendung und des Entfernens des Rufsignals auf einen Nulldurchgangspunkt des Rufsignals synchronisiert wird.

2. Ein Verfahren nach Anspruch 1, **dadurch gekennzeichnet, daß** der Zeitpunkt des Entfernens des Rufsignals auf einen Punkt 2 ms vor dem nächsten erwarteten Nulldurchgangspunkt des Rufsignals synchronisiert wird.

## Revendications

1. Procédé consistant à fournir un signal de sonnerie distinctive précis d'une cadence prédéterminée sélectionnée dans un agencement de plateforme d'accès multiservice qui inclut un moyen formant processeur central (1), une pluralité de cartes de lignes (2), chaque carte de lignes (2) incluant un moyen formant processeur auxiliaire (6) et une pluralité de relais de sonnerie contrôlables (12), chaque relais de sonnerie (12) connectant de manière contrôlable des signaux de sonnerie à une ligne d'abonné (3) associée à la carte de lignes correspondante (2), ledit procédé comprenant l'étape consistant à contrôler la cadence de sonnerie de signaux de sonnerie appliqués à des lignes d'abonnés associées à une carte de lignes avec ledit moyen formant processeur auxiliaire (6) associé à ladite carte de lignes comportant les étapes suivantes :
- générer un signal d'interruption (16) à chaque point de passage à zéro d'un signal de sonnerie, qui est défini comme un point dans le temps une fois par cycle de la composante alternative du signal de sonnerie, où la tension alternative passe à zéro volt ;
- faire que ledit moyen formant processeur auxiliaire (6) compte lesdits signaux d'interruption et déclenche l'actionnement des relais de sonnerie sur ladite carte de lignes et contrôle en conséquence le rythme d'application et de retrait dudit signal de sonnerie en référence aux tables internes contenant des informations de rythme appropriées pour ladite cadence prédéterminée sélectionnée de sorte que le rythme d'application et de retrait dudit signal de sonnerie soit synchronisé à un point de passage à zéro du signal de sonnerie.

2. Procédé selon la revendication 1, **caractérisé en ce que** le rythme de retrait dudit signal de sonnerie est synchronisé à un point 2 ms avant le prochain point de passage à zéro escompté du signal de sonnerie.
